# FASCICULE DE BREVET EUROPEEN

(11) **EP 0 467 791 B1**
(45) Date de publication et mention de la délivrance du brevet: **14.12.1994**
(21) Numéro de dépôt: 91420187.6
(22) Date de dépôt: 11.06.1991
(51) Int. Cl.: A01N 43/653, A01C 1/06, A01C 1/00

(54) **Procédé pour protéger les produits de multiplication des végétaux et les végétaux en résultant**
Verfahren zum Schutz der Vermehrungsprodukte von Pflanzen und dadurch erhaltene Pflanzen
Process for protecting multiplication products of plants and plants obtained thereby

(30) Priorité: 12.06.1990 FR 9007551
(43) Date de publication de la demande: 22.01.1992
(73) Titulaire: RHONE-POULENC AGROCHIMIE, 69009 Lyon (FR)
(72) Inventeur: Greiner, Alfred, F-69450 St Cyr au Mont d'Or (FR); Hutt, Jean, F-69009 Lyon (FR); Mugnier, Jacques, F-74330 La Balme de Lillingy (FR); Pepin, Régis, F-69140 Rillieux la Pape (FR)
(74) Mandataire: Chretien, François

(56) Documents cités:
- EP-A- 0 040 345
- EP-A- 0 267 778
- EP-A- 0 378 953

## Description

La présente invention concerne un procédé pour protéger à titre curatif ou préventif les produits de multiplication des végétaux et les végétaux en résultant contre les maladies fongiques (sauf Puccinia recondita et Fusarium roseum pour le blé variété Talent) par application audit produit de multiplication d'une composition fongicide contenant le 2-(4-chloro-benzylidène)-5,5-dimethyl-1-(1H-1,2,4-triazol-1-ylméthyl)-1-cylopentanol, un support inerte convenable en agriculture et éventuellement un tensio actif convenable en agriculture. Elle concerne également un produit de multiplication revêtu de ladite composition fongicide.

Il a en effet été trouvé de façon parfaitement inattendue que ledit composé fongicide en plus de son activité fongicide applicable aux produits de multiplication permettait de protéger la culture après la levée éventuellement jusqu'à la récolte et avait comme intérêt industriel majeur d'éviter dans de nombreux cas un ou plusieurs traitements foliaires.

Le 2-(4-chloro-benzylidène)-5,5-diméthyl-1-(1H-1,2,4-triazol-1-ylméthyl)-1-cyclopentanol est décrit dans la demande de brevet européen n° 378953.

Ledit composé peut être obtenu de la façon suivante :

### Exemple I : Préparation de 2-(4-chlorobenzylidène) 5,5-diméthyl 1-(1H-1,2,4-triazol-1-ylméthyl)-1-cyclopentanol.

A un mélange de 10 g de 2,2-diméthyl cyclopentanone et 13,8 g de 4-chlorobenzaldehyde dans 100 ml d'éthanol à 0°C, est ajouté 100 ml d'une solution aqueuse de soude à 10 %. Après 30 minutes une épaisse bouillie était filtrée et le solide lavé puis séché. On obtient 12,5 g de 2,2-diméthyl 5-(4-chlorobenzylidène) 1-cyclopentanone de point de fusion 120°C. Ce composé dissout dans 50 ml de THF était ajouté à une solution formée de la façon suivante : 1,9 g d'hydrure de sodium (dispersion à 80 % dans l'huile minérale) dans 50 ml de DMSO anhydre est chauffée à 80°C jusqu'à dissolution totale du solide. Puis la solution est diluée avec 100 ml de THF, puis refroidie à -10°C. On ajoute au mélange en dix minutes une solution de 11,5 g de triméthylsulfonium iodure dans 80 ml de diméthylsulfoxide et le mélange était agité pendant 15 minutes à -10°C. Une solution de 11,8 g de 2,2-diméthyl 4-chloro 5-(4-chlorobenzylidène) 1-cyclopentanone était ensuite ajoutée dans 100 ml de THF.

Le mélange ainsi produit est laissé à température ambiante puis versé dans l'eau et extrait à l'éther, lavé à l'eau, séché, distillé. On obtient le 7-(4-chlorobenzylidène) 4,4-diméthyl 1-oxaspiro (2,4) heptane directement utilisé pour l'étape suivante.

Un mélange de 5 g du produit avec 2,8 g de 1,2,4-triazole et 11 g de carbonate de potassium est chauffé dans 40 ml de N,N diméthylformamide durant 4 heures. Le mélange est versé dans l'eau, extrait à l'acétate d'éthyle. La phase organique est lavée, séchée, recristallisée pour obtenir le produit annoncé dont le point de fusion est de 143°C.

La structure du composé est très majoritairement (>95 %) celle où le groupe parachlorophényl est en position E par rapport au carbone portant le groupe hydroxy.

La 2,2-diméthylcyclopentanone peut être obtenue de manière connue dans la littérature ou est disponible sur le marché (voir fine chemical directory).

Aux exemples, 14, 15, 16 de la demande de brevet européen n° 89420520 est décrite une graine de blé variété talent revêtue dudit triazole.

Par le terme "produit de multiplication", on entend désigner toutes les parties génératives de la plante qu'on peut utiliser pour la multiplication de celle-ci. On citera par exemple les graines (semences au sens étroit), les racines, les fruits, les tubercules, les bulbes, les rhizomes, les parties de plantes. On mentionnera également les plantes germées et les jeunes plants qui doivent être transplantés après germination ou après la sortie de terre. Ces jeunes plants peuvent être protégés avant la transplantation par un traitement total ou partiel par immersion.

On préferera les graines pour les cultures autres que la pomme de terre.

Parmi les produits de multiplication convenant pour le procédé de traitement selon l'invention on préferera les :
- graines de dicotyledones : pois, concombre, melon, soja, coton, tournesol, colza, haricot, lin, betterave
- graines de monocotylédones : céréales (blé à l'exception de la variété talent avant le début du tallage, orge, seigle, avoine), maïs, riz
- ou les tubercules de pomme de terre.

De préférence les graines seront revêtues de 0,1 à 500 g de matière active par quintal de graine, de préférence 1 à 400 g par quintal.

De préférence, dans le cas des tubercules, celles-ci sont revêtues d'une quantité de matière active correspondant au trempage dudit produit dans une composition contenant 0,1g/l à 100 g/l de matière active.

Les compositions utilisables dans l'invention contiennent habituellement entre 0,5 et 95 % de matière active.

Par le terme "support", dans le présent exposé, on désigne une matière organique ou minérale, naturelle ou synthétique, avec laquelle la matière active est associée pour faciliter son application sur la plante, sur des graines ou sur le sol. Ce support est donc généralement inerte et il doit être acceptable en agriculture, notamment sur la plante traitée. Le support peut être solide (argiles, silicates naturels ou synthétiques, silice, résines, cires, engrais solides, etc...) ou liquide (eau, alcools, cétones, fractions de pétrole, hydrocarbures aromatiques ou paraffiniques, hydrocarbures chlorés, gaz liquéfiés, etc...).

L'agent tensioactif peut être un agent émulsionnant, dispersant ou mouillant de type ionique ou non ionique. On peut citer par exemple des sels d'acides polyacryliques, des sels d'acides lignosulfoniques, des sels d'acides phénolsulfoniques ou naphtalènesulfoniques, des polycondensats d'oxyde d'éthylène sur des alcools gras ou sur des acides gras ou sur des amines grasses, des phénols substitués (notamment des alkylphénols ou des arylphénols), des sels d'esters d'acides sulfosucciniques, des dérivés de la taurine (notamment des alkyltaurates), des esters phosphoriques d'alcools ou de phénols polyoxyéthylés. La présence d'au moins un agent tensioactif est souvent requise parce que la matière active et/ou le support inerte ne sont pas solubles dans l'eau et que l'agent vecteur de l'application est l'eau.

Ces composition peuvent contenir aussi toute sorte d'autres ingrédients tels que, par exemple, des colloïdes protecteurs, des adhésifs, des épaississants, des agents thixotropes, des agents de pénétration, des stabilisants, des séquestrants, des pigments, des colorants, des polymères.

Plus généralement, les compositions utilisables dans l'invention peuvent être associées à tous les additifs solides ou liquides correspondant aux techniques habituelles de la mise en formulation pour application du traitement de semences notamment.

On notera à ce propos que dans le jargon des hommes de métier, le terme traitement de semences se rapporte en fait au traitement des graines.

Les techniques d'application sont bien connues de l'homme de métier et elles peuvent être utilisées sans inconvénient dans le cadre de la présente invention.

On pourra citer par exemple le pelliculage ou l'enrobage.

Parmi les compositions, on peut citer de manière générale les compositions solides ou liquides.

Comme formes de compositions solides, on peut citer les poudres pour poudrage ou dispersion (à teneur en composé de formule (I) pouvant aller jusqu'à 100 %) et les granulés, notamment ceux obtenus par extrusion, par compactage, par imprégnation d'un support granulé, par granulation à partir d'une poudre (la teneur en composé de formule (I) dans ces granulés étant entre 1 et 80 % pour ces derniers cas).

Les compositions peuvent encore être utilisés sous forme de poudre pour poudrage ; on peut ainsi utiliser une composition comprenant 50 g de matière active, 10 g de silice finement divisée, 10 g de pigment organique et 970 g de talc ; on mélange et broie ces constituants et on applique le mélange par poudrage.

Comme formes de compositions liquides ou destinées à constituer des compositions liquides lors de l'application, on peut citer les solutions, en particulier les concentrés solubles dans l'eau, les concentrés émulsionnables, les émulsions, les suspensions concentrées, les aérosols, les poudres mouillables (ou poudre à pulvériser), les pâtes, les granulés dispersables.

Les concentrés émulsionnables ou solubles comprennent le plus souvent 10 à 80 % de matière active, les émulsions ou solutions prêtes à l'application contenant, quant à elles, 0,01 à 20 % de matière active.

Par exemple, en plus du solvant, les concentrés émulsionnables peuvent contenir quand c'est nécessaire, 2 à 20 % d'additifs appropriés comme les stabilisants, les agents tensio-actifs, les agents de pénétration, les inhibiteurs de corrosion, les colorants ou les adhésifs précedemment cités.

A partir de ces concentrés, on peut obtenir par dilution avec de l'eau des émulsions de toute concentration désirée, qui conviennent particulièrement à l'application sur les semences.

Les suspensions concentrées, également applicables en pulvérisation, sont préparées de manière à obtenir un produit fluide stable ne se déposant pas et elles contiennent habituellement de 10 à 75 % de matière active, de 0,5 à 15 % d'agents tensioactifs, de 0,1 à 10 % d'agents thixotropes, de 0 à 10 % d'additifs appropriés, comme des pigments, des colorants, des anti-mousses, des inhibiteurs de corrosion, des stabilisants, des agents de pénétration et des adhésifs et, comme support, de l'eau ou un liquide organique dans lequel la matière active est peu ou pas soluble : certaines matières solides organiques ou des sels minéraux peuvent être dissous dans le support pour aider à empêcher la sédimentation ou comme antigels pour l'eau.

Les poudres mouillables (ou poudre à pulvériser) sont habituellement préparées de manière qu'elles contiennent 20 à 95 % de matière active, et elles contiennent habituellement, en plus du support solide, de 0 à 5 % d'un agent mouillant, de 3 à 10 % d'un agent dispersant, et, quand c'est nécessaire, de 0 à 10 % d'un ou plusieurs stabilisants et/ou autres additifs, comme des pigments, des colorants, des agents de pénétration, des adhésifs, ou des agents antimottants, colorants, etc...

Pour obtenir ces poudres à pulvériser ou poudres mouillables, on mélange intimement la matière active dans des mélangeurs appropriés avec les substances additionnelles et on broie avec des moulins ou autres broyeurs appropriés. On obtient par là des poudres à pulvériser dont la mouillabilité et la mise en suspension sont avantageuses ; on peut les mettre en suspension avec de l'eau à toute concentration désirée et ces suspensions sont utilisables très avantageusement en particulier pour l'application sur les semences.

A la place des poudres mouillables, on peut réaliser des pâtes. Les conditions et modalités de réalisation et d'utilisation de ces pâtes sont semblables à celles des poudres mouillables ou poudres à pulvériser.

Les granulés dispersables sont habituellement préparés par agglomération, dans des systèmes de granulation appropriés, des compositions de type poudre mouillable.

Comme cela a déjà été dit, les dispersions et émulsions aqueuses, par exemple les compositions obtenues en diluant à l'aide d'eau une poudre mouillable ou un concentré émulsionnable selon l'invention, sont comprises dans le cadre général de la présente invention. Les émulsions peuvent être du type eau-dans-l'huile ou huile-dans-l'eau et elles peuvent avoir une consistance épaisse comme celle d'une "mayonnaise".

Parmi ces compositions, l'homme de métier choisira avantageusement celle ou celles convenant selon les conditions de mise en oeuvre.

Selon une variante préférée la composition utilisable dans l'invention contiendra également un pigment connu en soi pour diminuer la phytotoxicité des triazoles. Cette variante peut être intéressante dans le cas des fortes doses de fongicide, pour les dicotylédones surtout.

Dans le cas du riz, il a été trouvé que la composition avait également un effet desinfectant.

Le procédé selon l'invention peut être utilisé pour la protection tant préventive que curative des produits de multiplication des végétaux contre les champignons, notamment de type basidiomycètes, ascomycètes, adelomycètes ou fungi-imperfecti, en particulier les rouilles, les caries, les oïdium, le piétin-verse, les fusarioses, fusarium roseum, fusarium nivale, helminthosporioses, rhynchosporioses, septorioses, rhizoctones des végétaux et des plantes en général et en particulier des céréales telles que le blé, l'orge, le seigle, l'avoine et leurs hybrides et aussi le riz et le maïs.

Le procédé selon l'invention permet en particulier de lutter contre les champignons notamment de type basidiomycètes, ascomycètes, adelomycètes ou fungi-imperfecti comme Botrytis cinerea, Erysiphe graminis, Puccinia graminis, Puccinia recondita, Piricularia oryzae, Cercospora beticola, Puccinia striiformis, Erysiphe cichoracearum, Rhinchosporium secalis, Fusarium, Solani, Fusarium oxysporum (melonis par exemple), Pyrenophora avenae, Septoria tritici, Septoria avenae, Whetzelinia sclerotiorum, Mycosphaerella fijiensis, Alternaria solani, Aspergillus niger, Cercospora arachidicola, Cladosporium herbarum, Tilletia caries, Tilletia contreversa, Fusarium roseum, Fusarium nivale, Helminthosporium oryzae, Helminthosporium teres, Helminthosporium gramineum, Helminthosporium sativum, Penicillium expansum, Pestalozzia sp, Phoma betae, Phoma foveata, Phoma lingam, Ustilago maydis, Ustilago nuda, Ustilago hordei, Ustilago avenae, Verticillium dahliae, Ascochyta pisi, Guignardia bidwellii, Corticium rolfsii, Phomopsis viticola, Sclerotinia sclerotiorum, Sclerotinia minor, Coryneum cardinale, Rhizoctonia solani, Acrostalagmus koningi, les Alternaria, les Colletotrichum, Corticium rolfsii, Diplodia natalensis, Gaeumannomyces graminis, Gibberella fujikuroi, Hormodendron cladosporioides, Myrothecium verrucaria, Paecylomyces varioti, Pellicularia sasakii, Phellinus megaloporus, Sclerotium rolfsii, Stachybotris atra, Trichoderma pseudokoningi, Trichothecium roseum.

Le procédé permet de lutter efficacement au niveau des maladies des céréales (oïdium, rouille, piétin-verse, rhinchosporiose, helminthosporioses, septorioses et fusarioses). Elles présentent également un grand intérêt en raison de leur activité sur la pourriture grise (Botrytis) et les cercosporioses, et, de ce fait, elles peuvent être appliquées sur des produits de multiplication de cultures aussi variées que la vigne, les cultures maraîchères et l'arboriculture et les cultures tropicales telles que l'arachide, le bananier, le caféier, la noix de pécan et d'autres.

Ces compositions sont également utiles dans le cadre de la désinfection des semences de céréales contre Ustilago nuda, Septoria nodorum, Tillatia caries et Tilletia controversa, Hemin thosporium gramineum et de nombreuses espèces de Fusarium.

L'invention a également pour objet le produit de multiplication des végétaux avec les variantes préférées telles qu'elles ont été définies ci-dessus revêtus et/ou contenant le 2-(4-chloro-benzylidène)-5,5-dimethyl-1-(1H-1,2,4-triazol-1-ylmethyl)-1-cyclopentanol à la condition que ledit produit de multiplication ne soit pas un grain de blé de variété talent.

Le terme revêtu de et/ou contenant signifie que la matière active se trouve majoritairement à la surface du produit lors de l'application encore qu une partie plus ou moins significative puisse y pénétrer selon le mode d'application. Quand ledit produit de multiplication est replanté, il absorbe la matière active.

En fait commercialement on peut avancer que la matière active est à la surface la plupart du temps en majorité.

De préférence le produit de multiplication est choisi parmi les graines choisies avantageusement parmi les graines :
- dicotyledones : pois, concombre, soja, melon, coton, tournesol, colza, haricot, lin, betterave
- monocotyledones : blé tendre d'hiver à l'exception de la variété talent, blé tendre de printemps, blé dur, orge, seigle, avoine, luzerne, maïs, riz.

De préférence les graines sont revêtues à raison de 0,1 à 500 g de matière active par quintal de graine et de préférence 1 à 400 g/quintal.

Une autre variante avantageuse consiste en ce que le produit de multiplication est un tubercule de pomme de terre de préférence revêtu d'une quantité de matière active correspondant au trempage dudit produit dans une solution contenant 0,1 g/l à 100 g/l de matière active.

### EXEMPLES

### Exemple 1

Le 2-(4-chlorophenylbenzylidène)-5,5-dimethyl-1-(1H-1,2,4-triazol-1-ylmethyl)-1-cyclopentanol(A), a été formulé sous forme d'une suspension concentrée à 200 g/l selon des techniques bien connues de l'homme de métier.

Des graines de blé variété Nebraska particulièrement sensibles à la rouille jaune (Puccinia striiformis) sont traitées avec la formulation ci-dessus en la diluant de manière appropriée de façon à obtenir les quantités de matière active par quintal indiquées dans le tableau ci-dessous. Ces graines sont semées. Les résultats sont lus 192 jours après le semis.

| Traitement | Dose g/q | % surface foliaire attaquée |
|---|---|---|
| Témoin | - | 42.5 |
| A | 3O | 18.8 |
| | 6O | 11.O |
| | 9O | 9.3 |
| | 12O | 3.O |

### Exemple 2 : Essai de phytotoxicité

Des graines d'orge sont traitées comme précédemment et un mois après le semis on mesure le pourcentage de graines germées.

Les résultats sont indiqués ci-dessous

| Traitement | Dose g/q | % de graines germées |
|---|---|---|
| Témoin | - | 78.5 |
| A | 6O | 76.1 |
| | 12O | 78.3 |
| | 18O | 77.5 |

Aucun signe de phytotoxicité n'a été observé.

### Exemple 3

Des graines d'orge naturellement contaminées par Ustilago nuda sont traitées avec la formulation ci-dessus de façon à obtenir les quantités de matière active par quintal indiquées dans le tableau ci-dessous. Ces graines sont semées.

Les résultats sont lus 8 mois après le semis.

| Traitement | Dose g/q | Epis attaqués/m2 |
|---|---|---|
| Témoin | - | 3O.3 |
| A | 5 | O |
| | 1O | O |
| | 3O | O |

### Exemple 4

Des graines d'orge naturellement contaminées par Septoria nodorum sont traitées comme à l'exemple 2.

On lit les résultats 1 mois après le semis.

| Traitement | Dose g/q | % d'efficacité |
|---|---|---|
| Témoin | - | O |
| A | 5 | 1OO |
| | 1O | 1OO |
| | 3O | 1OO |

### Exemple 5

Des graines d'orge sont traitées comme à l'exemple 4.

Les résultats sont lus 152 jours après le semis, après une attaque par Erysiphe graminis.

| Traitement | Dose g/q | % surface foliaire attaquée |
|---|---|---|
| Témoin | - | 35.0 |
| A | 30 | 18.8 |
| | 60 | 11.3 |
| | 9O | 9.0 |
| | 12O | 9.3 |

### Exemple 6

Des grains de maïs naturellement contaminés par Gibberella fujikuroi sont traités comme avec la bouillie de l'exemple 1.

Les résultats sont lus 22 jours après le semis.

| Traitement | Dose g/q | % de plantes saines, 22 jours après le semis |
|---|---|---|
| Témoin | - | 13.5 |
| A | 5 | 24.1 |
| | 25 | 26.2 |
| | 5O | 59.O |
| | 1OO | 7O.2 |

### Exemple 7

Des grains de riz naturellement contaminés par Gibberella fujikuroi (Fusarium) sont traités avec la bouillie de l'exemple 1.

Les résultats sont lus un mois après le semis.

| Traitement | Dose g/q | % plantes malades |
|---|---|---|
| Témoin | - | 98.9 |
| A | 5 | 45.6 |
| | 25 | 3.0 |
| | 1OO | O |

Aucun effet phytotoxique n'a été observé.

### Exemple 8

Des graines de pois contaminés naturellement par Fusarium solani sont traitées avec la bouillie de l'exemple 1.

Les résultats sont lus un mois après le semis.

| Traitement | Dose g/q | % tiges attaquées |
|---|---|---|
| Témoin | - | 57.3 |
| A | 5 | 27.1 |
| | 25 | 23.2 |
| | 5O | 22.1 |
| | 1OO | 1O.O |

### Exemple 9

Des graines de concombre sont traitées avec la bouillie de l'exemple 1.

Les résultats sont lus deux mois après le semis, après une attaque par Erysiphe cichoriacearum.

| Traitement | Dose g/q | % surface foliaire attaquée |
|---|---|---|
| Témoin | - | 36.2 |
| A | 25 | 23.8 |
| | 5O | 19.7 |
| | 1OO | 18.3 |
| | 2OO | 6.6 |

### Exemple 1O

Des graines de melon sont traitées avec la bouillie de l'exemple 1.

Les résultats sont lus 14 jours après une contamination par Fusarium oxysporum var-melonis.

| Traitement | Dose g/q | % efficacité |
|---|---|---|
| Témoin | - | 0 |
| A | 3 | 1OO |
| | 6 | 1OO |
| | 12 | 1OO |
| | 25 | 1OO |

### Exemple 11

Des tubercules de pommes de terre naturellement contaminés par Phoma foveata sont trempés dans une bouillie comme indiqué à l'exemple 1.

Les résultats sont lus 64 jours après le semis.

| Traitement | Dose g m.a/l | % tubercule malade, 64 j. après semis |
|---|---|---|
| Témoin | - | 84.8 |
| A | 1 | 4.4 |
| | 5 | 2.O |
| | 1O | 2.O |

Il a été par ailleurs constaté que le présent fongicide est sélectif, sans signe de phytotoxicité, sur graines de :

| | | |
|---|---|---|
| Dicots. | coton à | 100 g/q |
| | tournesol à | 5O g/q |
| | colza à | 5O g/q |
| | haricot à | 25 g/q |
| | lin à | 1O g/q |
| | betterave à | 5O g/q |
| monocots. | maïs à | 200 g/q |

dans les mêmes conditions que précedemment.

De même il a été constaté que le fongicide révelait une excellente activité, en traitement de semences, contre :

| | |
|---|---|
| Phoma betae | betterave |
| Phoma | pomme de terre |
| Fusarioses vasculaires | melon |
| Aschochyta (anthracnose) | pois |

Il a été enfin trouvé que la composition fongicide était également utile en traitement de sol pour le riz et le bananier.

### TRAITEMENT DU SOL BANANIER - CERCOSPORIOSE

Tableau. Effet de A contre Mycosphaerella musicola, appliqué en traitement du sol, sur bananier, en Côte d'Ivoire.

Les bananiers sont traités à tous les stades de développement.

| Traitement | Dose/bananier (g) | % feuilles attaquées |
|---|---|---|
| Témoin | - | 26 |
| A | 0.5 | 6 |

Le fongicide (A) ou 2-(4-chloro-benzylidène-5-dimethyl-1-(1H-1,2,4-triazol-1-ylmethyl)-1-cyclopentanol
répond à la formule suivante :

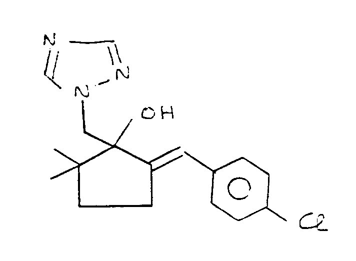

## Revendications

1. Procédé pour protéger à titre curatif ou préventif les produits de multiplications des végétaux et les végétaux en résultant contre les maladies fongiques (sauf Puccinia recondita et Fusarium roseum pour le blé variété Talent) caractérisé en ce que l'on applique audit produit de multiplications une composition fongicide contenant le 2-(4-chloro-benzylidène)-5,5-dimethyl-1-(1H-1,2,4-triazol-1ylmethyl)-1-cyclopentanol, un support inerte en agriculture et éventuellement un tensio actif convenable en agriculture.

2. Procédé selon la revendication 1, caractérisé en ce que ledit produit de multiplication est une graine.

3. Procédé selon la revendication 2, caractérisée en ce que la graine est choisi parmi les graines de :
- monocotylédones : blé dur, blé tendre de printemps, blé tendre d'hiver, orge, avoine, seigle, maïs, riz
- dicotylédones : pois, concombre, melon, coton, tournesol, colza, soja, haricot, lin, betterave.

4. Procédé selon la revendication 1, caractérisé en ce que ledit produit de multiplication est un tubercule de pomme de terre.

5. Procédé selon l'une des revendications 2 ou 3 ou 4, caractérisé en ce que l'on applique sous forme de composition fongicide, à ladite graine 0,1 à 500 g de matière active par quintal de graine de préférence 1 à 400 ou à la tubercule une quantité de matière active correspondant au trempage de ladite tubercule dans une composition contenant O,1 à 1OOg/l de matière active.

6. Produit de multiplication des végétaux à l'exception des grains de blé variété talent revêtu du et/ou contenant le 2-(4-chloro-benzylidène)-5,5-dimethyl-1-(1H-1,2,4-triazol-1-ylmethyl)-1-cyclopentanol.

7. Produit de multiplication des végétaux selon la revendication 6, caractérisé en ce qu'il est choisi parmi les graines.

8. Produit de multiplication des végétaux selon la revendication 7, caractérisé en ce que les graines sont choisies parmi les graines de dicotylédones : pois, concombre, soja, melon, coton, tournesol, colza, haricot, lin, betterave, les graines de monocotylédones : blé tendre d'hiver à l'exception de la variété talent, blé dur, blé tendre de printemps, orge, seigle, maïs, riz.

9. Produit de multiplication selon l'une des revendications 7 ou 8, caractérisé en ce que les graines sont revêtues à raison de 0,1 à 5OO g de matière active par quintal de graines, de préférence 1 à 400.

10. Produit de multiplication selon la revendication 6, caractérisé en ce qu'il est un tubercule de pomme de terre.

11. Produit de multiplication selon la revendication 1O, caractérisé en ce qu'il est revêtu d'une quantité de matière active correspondante au trempage dudit produit dans une composition contenant O,1 g/l à 1OO g/l de matière active.

## Claims

1. Process for protecting, by curative or preventive means, plant propagation products and the plants obtained from them against fungal diseases (except Puccinia recondita and Fusarium roseum for wheat of the Talent variety), characterized in that there is applied to the said propagation product a fungicidal composition containing 2-(4-chlorobenzylidene)-5,5-dimethyl-1-(1H-1,2,4-triazol-1-ylmethyl)-1-cyclopentanol_{,} an agriculturally suitable inert carrier and optionally an agriculturally suitable surface-active agent.

2. Process according to claim 1, characterized in that the said propagation product is a seed.

3. Process according to claim 2, characterized in that the seed is chosen from among the seeds of:
- monocotyledons; hard wheat, soft spring wheat, soft winter wheat, barley, oat, rye, maize and rice,
- dicotyledons pea, cucumber, melon, cotton, sunflower, rape, soybean, bean, flax and beet.

4. Process according to claim 1, characterized in that the said propagation product is a potato tuber.

5. Process according to one of claims 2 or 3 or 4, characterized in that there is applied to the said seed, in the form of fungicidal composition, 0.1 to 500 g of active material per quintal of seed, preferably 1 to 400, or to the tuber a quantity of active material which corresponds to soaking the said tuber in a composition containing 0.1 to 100 g/l of active material.

6. Plant propagation product, with the exception of wheat grains of the Talent variety, coated with and/or containing 2-(4-chlorobenzylidene)-5,5-dimethyl-1-(1H-1,2,4-triazol-1-ylmethyl)-1-cyclopentanol.

7. Plant propagation product according to claim 6, characterized in that it is chosen from among seeds.

8. Plant propagation product according to claim 7, characterized in that the seeds are chosen from among dicotyledon seeds: pea, cucumber, soybean, melon, cotton, sunflower, rape, bean, flax, beet, monocotyledon seeds: soft winter wheat with the exception of the Talent variety, hard wheat, soft spring wheat, barley, rye, maize and rice.

9. Propagation product according to one of claims 7 or 8, characterized in that the seeds are coated with an amount of 0.1 to 500 g of active material per quintal of seed, preferably 1 to 400.

10. Propagation product according to claim 6, characterized in that it is a potato tuber.

11. Propagation product according to claim 10, characterized in that it is coated with a quantity of active material which corresponds to soaking the said product in a composition containing 0.1 g/l to 100 g/l of active material.

## Patentansprüche

1. Verfahren zum kurativen oder vorbeugenden Schutz der Vermehrungsprodukte von Pflanzen und der daraus resultierenden Pflanzen gegen Pilzerkrankungen (außer gegen Puccinia recondita und Fusarium roseum bei Weizen der Sorte Talent), gekennzeichnet durch Anwendung einer fungiciden Zusammensetzung auf das Vermehrungsprodukt, die 2-(4-Chlorbenzyliden)-5,5-dimethyl-1-(1H-1,2,4-triazol-1-ylmethyl)-1-cyclopentanol und einen landwirtschaftlich geeigneten inerten Träger sowie ggf. ein landwirtschaftlich geeignetes Tensid enthält.

2. Verfahren nach Anspruch 1, dadurch gekennzeichnet, daß das Vermehrungsprodukt ein Samen ist.

3. Verfahren nach Anspruch 2, dadurch gekennzeichnet, daß der Samen unter Samen folgender Pflanzen ausgewählt ist:
- Monocotyledonen: Hartweizen, Frühjahrs-Weichweizen, Winter-Weichweizen, Gerste, Hafer, Roggen, Mais, Reis;
- Dicotyledonen: Erbsen, Gurken, Melone, Baumwolle, Sonnenblume, Raps, Soja, Bohnen, Flachs, Zuckerrübe.

4. Verfahren nach Anspruch 1, dadurch gekennzeichnet, daß das Vermehrungsprodukt eine Kartoffelknolle ist.

5. Verfahren nach einem der Ansprüche 2 bis 4, gekennzeichnet durch Anwendung des Wirkstoffs in Form einer fungiciden Zusammensetzung auf die Samen in einer Wirkstoffmenge von 0,1 bis 500 g/dt und vorzugsweise 1 bis 400 g/dt oder auf die Knollen in einer Wirkstoffmenge, die dem Eintauchen der Knollen in eine Zusammensetzung entspricht, die einen Wirkstoffgehalt von 0,1 bis 100 g/l aufweist.

6. Vermehrungsprodukte von Pflanzen, mit Ausnahme der Samen von Weizen der Sorte Talent, die mit 2-(4-Chlorbenzyliden)-5,5-dimethyl-1-(1H-1,2,4-triazol-1-ylmethyl)-1-cyclopentanol überzogen sind und/oder diese Substanz enthalten.

7. Vermehrungsprodukte von Pflanzen nach Anspruch 6, dadurch gekennzeichnet, daß sie unter Samen ausgewählt sind.

8. Vermehrungsprodukte von Pflanzen nach Anspruch 7, dadurch gekennzeichnet, daß die Samen unter den Samen folgender zweikeimblättriger bzw. einkeimblättriger Pflanzen ausgewählt sind:
Dicotyledonen: Erbsen, Gurken, Soja, Melone, Baumwolle, Sonnenblume, Raps, Bohnen, Flachs, Zuckerrüben; Monocotyledonen: Winter-Weichweizen mit Ausnahme der Sorte Talent, Hartweizen, Frühjahrs-Weichweizen, Gerste, Roggen, Mais, Reis.

9. Vermehrungsprodukte nach Anspruch 7 oder 8, dadurch gekennzeichnet, daß die Samen mit einer Wirkstoffmenge von 0,1 bis 500 g/dt und vorzugsweise von 1 bis 400 g/dt überzogen sind.

10. Vermehrungsprodukte nach Anspruch 6, dadurch gekennzeichnet, daß es sich um Kartoffelknollen handelt.

11. Vermehrungsprodukte nach Anspruch 10, dadurch gekennzeichnet, daß sie mit einer Wirkstoffmenge überzogen sind, die dem Eintauchen des Vermehrungsprodukts in eine Zusammensetzung entspricht, die einen Wirkstoffgehalt von 0,1 bis 100 g/l aufweist.
